(19) Europäisches Patentamt
European Patent Office
Office européen des brevets

(11) EP 1 758 229 B1

(12) EUROPÄISCHE PATENTSCHRIFT

(45) Veröffentlichungstag und Bekanntmachung des Hinweises auf die Patenterteilung:
26.05.2010 Patentblatt 2010/21

(51) Int Cl.:
H02K 17/24 (2006.01)
H02K 27/28 (2006.01)
H02K 29/00 (2006.01)

(21) Anmeldenummer: 06116507.2

(22) Anmeldetag: 03.07.2006

(54) **Elektromotor**

Electric motor

Moteur électrique

(84) Benannte Vertragsstaaten:
AT BE BG CH CY CZ DE DK EE ES FI FR GB GR HU IE IS IT LI LT LU LV MC NL PL PT RO SE SI SK TR

(30) Priorität: 23.08.2005 DE 202005013269 U
18.04.2006 DE 102006018068

(43) Veröffentlichungstag der Anmeldung:
28.02.2007 Patentblatt 2007/09

(73) Patentinhaber: Hermann, Stefan
93096 Köfering (DE)

(72) Erfinder: Hermann, Stefan
93096 Köfering (DE)

(74) Vertreter: Graf, Helmut et al
Patentanwälte
Graf Wasmeier Glück
Postfach 10 08 26
93008 Regensburg (DE)

(56) Entgegenhaltungen:
WO-A-01/50588     WO-A-99/14847
US-B1- 6 252 331

**Beschreibung**

Die vorliegende Erfindung bezieht sich auf einen Elektromotor und insbesondere auf einen drehstrombetriebenen Elektromotor gemäß Oberbegriff Patentanspruch 1 oder 2.

Elektromotoren sind aus dem Stand der Technik seit langem bekannt und weisen die unterschiedlichsten Ausführungsformen auf. So sind beispielsweise Gleichstrommotoren bekannt, bei denen einem Rotor über einen Kommutator Gleichstrom zugeführt und auf diese Weise die Drehbewegung erzeugt wird. Daneben sind auch Drehstrommotoren, beispielsweise Synchron- oder Asynchronmotoren bekannt, bei denen dem Stator ein Drehstrom zugeführt wird und der Rotor sich infolge dieses Drehstroms bzw. infolge der durch diesen Drehstrom erzeugten Magnetfelder dreht.

Eine Drehzahlregulierung ist jedoch bei den meisten Elektromotoren relativ aufwendig. So wird beispielsweise bei drehstrombetriebenen Elektromotoren üblicher Bauart die Drehzahlregelung dadurch erreicht, dass die einzelnen Spulen des Stators umgeschaltet werden oder die Frequenz des verwendeten Drehstroms geändert wird. Bei vielen Ausführungsformen ist der Rotor permanent magnetisiert oder weist kurzgeschlossene Spulen auf. Bei einem Gleichstrommotor kann die Drehzahl über die dem Rotor zugeführte Spannung mittelbar reguliert werden.

Alle aus dem Stand der Technik bekannten Verfahren erlauben jedoch keine Drehzahlregulierung von Null an und insbesondere keine Drehzahlregulierung von Null an unter Volllast. Gleichstrommotoren erlauben zwar eine Regelung beginnend von Null an aber auch hier ist keine Regelung unter Volllast möglich, da geringe Drehzahlen mit geringen Spannungen und damit geringen Leistungen erreicht werden.

Ein Elektromotor mit den Merkmalen des Oberbegriffs des Patentanspruches 1 undes Anspruches 2 ist bekannt (US 6,252,331 B1). Der benannte Elektromotor besteht aus einem Stator in einer Statorwicklung, die von einer Dreiphasen-Wechselspannung bzw. Drehstromspannung gespeist wird und aus einem Rotor mit mehreren um die Rotorachse versetzten Polen, die von Vorsprüngen von Rotorsegmenten gebildet sind und deren Magnetfeld durch eine mit dem Rotor nicht umlaufende, die Achse des Rotors umschließende Erregerspulenanordnung erzeugt wird, und zwar durch Ansteuerung durch eine Zweiphasen-Wechselspannung mit veränderbarer Frequenz.

Der vorliegenden Erfindung liegt daher die Aufgabe zugrunde, einen Elektromotor zu schaffen, der eine Drehzahlregulierung von Null an erlaubt. Des Weiteren soll ein Elektromotor zur Verfügung gestellt werden, der auch bei geringen Drehzahlen bzw. auch im Stillstand unter Volllast betrieben werden kann.

Dies wird erfindungsgemäß durch einen Elektromotor nach Anspruch 1oder 2 erreicht. Vorteilhafte Ausführungsformen und Weiterbildungen sind Gegenstand der Unteransprüche.

Der erfindungsgemäße Elektromotor weist einen Stator und einen drehbar gegenüber dem Stator angeordneten Rotor auf. Erfindungsgemäß wird der Stator mit einer ersten Wechselspannung einer ersten Frequenz gespeist, der Rotor wird mit einer zweiten Wechselspannung mit einer zweiten Frequenz gespeist und wenigstens eine der Frequenzen ist veränderbar. Vorzugsweise sind die beiden Frequenzen unterschiedlich. Unter einer Speisung des Stators wird verstanden, dass die Statorspulen mit einer Wechselspannung versorgt werden. Unter Speisung des Rotors wird verstanden, dass mit den mit einer Wechselspannung gespeisten Erregerspulen Magnetfelder im Rotor induziert werden. Im Gegensatz zu herkömmlichen Elektromotoren werden also sowohl der Rotor als auch der Stator jeweils mit Wechselspannungen versorgt.

Bei den Wechselspannungen handelt es sich um Drehstromwechselspannungen. Allgemein werden jedoch im Rahmen der vorliegenden Offenbarung unter dem Begriff Wechselspannung solche Spannungen verstanden, die sich zeitabhängig ändern. Dadurch, der Stator und der Rotor von Drehstromquellen mit unterschiedlichen Frequenzen gespeist werden, haben die erzeugten Magnetfelder im Rotor bzw. im Stator unterschiedliche Winkelfrequenzen. Auf diese Weise kann der Rotor gegenüber dem Stator in eine Drehbewegung versetzt werden. Dabei ergibt sich die Drehzahl $\Omega_{Rotor}$ des Rotors aus den Frequenzen der verwendeten Drehströme nach folgender Gleichung:

$$\Omega_{Rotor} = \omega_{Stator} - \omega_{Rotor} \quad (1).$$

Gleichung (1) gilt in dem Fall, in dem pro Drehstromkomponente die Anzahl der Spulen im Stator und im Rotor jeweils eins ist. Falls die Anzahl n der Spulen pro Drehzahlkomponente größer als 1 ist ergeben sich für die erzeugten Magnetfelder im Rotor bzw. im Stator niedrigere Winkelfrequenzen. In diesem Fall gilt folgender Zusammenhang für $\Omega_{Rotor}$:

$$\Omega_{Rotor} = (\omega_{Stator} - \omega_{Rotor})/n \quad (2).$$

Dabei ist $\omega_{Rotor}$ die Frequenz der Drehstromversorgung im Rotor, $\omega_{Stator}$ die Frequenz der Drehstromversorgung im Stator, $\Omega_{Rotor}$ die Drehzahl des Rotors und n die Zahl der Spulen pro Drehstromkomponente.

Falls die beiden Frequenzen $\omega_{Stator}$ und $\omega_{Rotor}$ gleich sind, ist auch deren Differenz Null und damit ist die Drehzahl des Motors ebenfalls Null. Dabei ist jedoch zu beachten, dass in diesem Falle gleichwohl der Motor unter Last betrieben wird und damit seine Ruhestellung festgesetzt wird. Damit setzt ein derart betriebener Motor einer von außen eingebrachten Drehbewegung ein Drehmoment entgegen. Hingegen würde beispielsweise ein Gleichstrommotor einer Drehbewegung von außen in seiner Ruhestellung keinen Widerstand entgegensetzen.

Vorzugsweise ist die Differenz der verwendeten Frequenzen klein gegenüber den Frequenzen selbst bzw. die Frequenzen werden so gewählt, dass deren Differenz im Verhältnis zur Summe immer klein bleibt. Auf diese Weise wird erreicht, dass der Motor im gesamten Regelbereich mit maximaler Last betrieben werden kann. Vorzugsweise sind beide Frequenzen der beiden zu speisenden und verwendeten Drehströme unabhängig voneinander veränderbar. So wäre es beispielsweise möglich, dass die Frequenz, mit der der Stator gespeist wird, stufenweise veränderbar ist und auf diese Weise Drehzahlbereiche festgelegt werden. Dem gegenüber könnte beispielsweise die Frequenz des Rotors gleitend veränderbar sein und zwar jeweils zwischen den stufenweise festgelegten Bereichen der Statorfrequenzen. Der Fachmann erkennt, dass hier jedoch auch andere Möglichkeiten der Frequenzeinstellung bestehen.

Vorzugsweise wird im Stator je Drehstromkomponente mindestens je eine Spule verwendet. Es ist jedoch auch möglich, pro Drehstromkomponente jeweils mehrere Spulen vorzusehen.

Um die maximale Motorenleistung auch bei geringen Drehzahlen bzw. Drehzahlen von annähernd Null zu erreichen ist es vorteilhaft, dass die Frequenzen der Drehströme im Wesentlichen der Nennfrequenz des Motors entsprechen. Damit wird zusätzlich erreicht, dass bei einer Drehstromfrequenzdifferenz nahe Null der Motor mit dem maximalen Drehmoment gebremst wird. Auch die Drehrichtung kann durch entsprechende Wahl der Frequenzen reguliert werden, d.h. sie ist abhängig davon ob die Frequenz des Rotors größer ist als die Frequenz des Stators oder geringer.

Der Rotor wird berührungslos mit der zweiten Wechselspannung bzw. dem Drehstrom gespeist. An dem Stator sind Erregerspulen angeordnet, die den Drehstrom erzeugen, mit dem der Rotor gespeist wird, Dies bedeutet, dass die Schleiferringe durch magnetische Gleitringe mit Magnetpol ersetzt werden können, die zur direkten Übertragung der Magnetfelder von den mit Drehstrom versorgten Polen der Erregerspulen dienen. Diese Lösung ist damit wartungsärmer, aber der gesamte Wirkungsgrad des Elektromotors kann niedriger sein als im Falle einer Ausführung mit elektrischen Schleiferringen.

Vorzugsweise weist der Rotor einen aus mehreren Segmenten zusammengesetzten Rotorkörper auf, der entlang seiner Umfangsrichtung durch die Erregerspulen unterschiedlich magnetisierbar ist. Dabei ist es möglich, dass Vorsprünge mehrerer Segmente in Umfangsrichtung des Rotorkörpers abwechselnd angeordnet sind und entsprechend gegeneinander magnetisiert werden können. Vorzugsweise sind die mehreren Segmente des Rotorkörpers gegeneinander isoliert. Besonders vorteilhaft weisen die Segmente ringförmige Abschnitte und sich von diesen ringförmigen Abschnitten in einer Längsrichtung des Rotorkörpers erstreckende bevorzugt kreissegmentförmig geformte Vorsprünge auf. Dabei ist es möglich, die ringförmigen Abschnitte zu magnetisieren und diese Magnetisierung auf die Vorsprünge zu übertragen.

Bei einer weiteren bevorzugten Ausführungsform ist es auch möglich, derartige Segmente bzw. Segmentzusammenstellungen in der Längsrichtung des Rotorkörpers hintereinander anzuordnen wobei besonders vorteilhaft die einzelnen Segmente gegeneinander verdreht sind.

Die folgende Erfindung ist weiterhin auf die Verwendung eines Motors der oben beschriebenen Art für ein Kraftfahrzeug gerichtet. Insbesondere kann ein derartiger Elektromotor in einem Elektrofahrzeug Anwendung finden. Dadurch, dass eine Drehzahlregelung bis zum Stillstand möglich ist, kann der Motor das Fahrzeug ohne ein zwischengeschaltetes Getriebe antreiben.

Weitere Vorteile und Ausführungsformen ergeben sich aus den beigefügten Zeichnungen.

Dabei zeigen:

| | |
|---|---|
| Fig. 1 | eine Prinzipdarstellung eines Elektromotors nach dem Stand der Technik; |
| Fig. 2 | eine Prinzipdarstellung eines Elektromotors; |
| Fig. 3 | ein Diagramm zur Veranschaulichung des Drehmomentverlaufs; |
| Fig. 4 un 5 | ein Schaltbild und eine Darstellung eines Motors nach dem Stand der Technik; |
| Fig. 6 | einen erfindungsgemäßen Motor mit induktiver Spulenanregung in einer ersten Ausführungsform; |
| Fig. 7 | die einzelnen Segmente des Rotorkörpers; |
| Fig. 8 | eine Seitenansicht der Segmente aus Figur 7; |
| Fig. 9 | einen weiteren segmentierten Rotorkörper; |
| Fig. 10 | eine weitere Ausführungsform eines segmentierten Rotorkörpers; |
| Fig. 11 und 12 | unterschiedliche Anwendungen eines erfindungsgemäßen Elektromotors. |

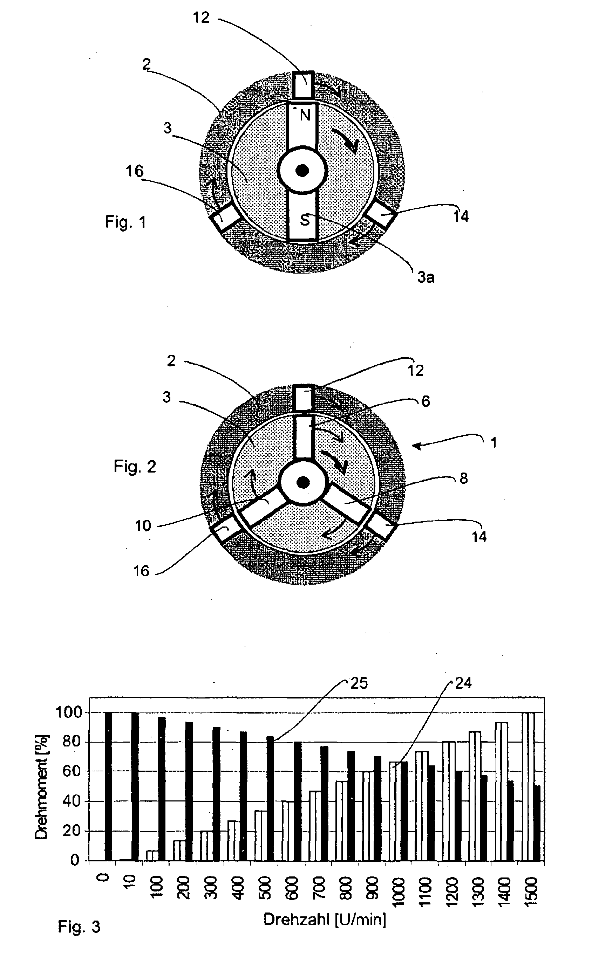

Fig. 1 zeigt eine schematische Darstellung eines Elektromotors nach dem Stand der Technik. Dieser Elektromotor weist einen Stator 2 auf und einen sich gegenüber diesem Stator 2 drehenden Rotor 3. In diesem Fall weist der Rotor einen Permanentmagneten 3a auf. Die Bezugszeichen 12, 14, 16 beziehen sich drei Statorspulen, die mit einem Drehstrom versorgt werden. Durch diesen Drehstrom kann der Rotor 3 gegenüber dem Stator 2 in Drehung versetzt werden. Allerdings ist hier, wie eingangs erwähnt, eine Drehzahlregelung von Null an unter Volllast nicht möglich, da keine entsprechende Anpassung der Drehstromfrequenzen möglich ist.

Fig. 2 zeigt eine schematische Darstellung eines Elektromotors. Dieser weist ebenfalls einen Stator 2 und einen sich gegenüber diesem Stator 2 drehenden Rotor 3 auf. Auch hier sind an dem Stator drei Spulen 12, 14, und 16 vorgesehen, zusätzlich jedoch drei weitere Drehstromspulen 6, 8, 10 an dem Rotor 3 angeordnet. Die Spulen 6, 8, 10, die im folgenden als auch Rotorspulen bezeichnet werden, werden ebenfalls mit einem Drehstrom gespeist. Dabei werden die Rotorspulen mit der ersten Frequenz $\omega_{Rotor}$ und die Statorspulen mit einer zweiten Frequenz $\omega_{Stator}$ gespeist. Die Drehzahl des Rotors ergibt sich, wie oben erwähnt, aus der Differenz dieser beiden Frequenzen. Durch eine entsprechende Änderung der einen Frequenz gegenüber der anderen können damit im Prinzip beliebige Drehzahlen eingestellt und gleichzeitig der erfindungsgemäße Motor unter Volllast betrieben werden.

Figur 3 zeigt eine schematische Darstellung zur Veranschaulichung des Motordrehmoments in Abhängigkeit von der Drehzahl. Dabei charakterisieren die leeren Balken 24 das Verhalten eines Elektromotors nach dem Stand der Technik und die ausgefüllten Balken 25 das Verhalten eines Motors. Bei dem Motor kann durch Änderung der Drehfrequenzen $\omega_{Rotor}$, $\omega_{Stator}$ die Drehzahl während des Betriebs annähernd unter Volllast eingestellt werden. Damit ist auch bei geringen Drehzahlen, wie gezeigt, ein maximales Drehmoment möglich. Genauer gesagt werden bevorzugt die Frequenzen von Drehstromgeneratoren so gewählt, dass sie annähernd der Nennfrequenz des Motors entsprechen. Bei aus dem Stand der Technik bekannten Motoren hingegen sinkt das Drehmoment mit sinkender Drehzahl rapide ab und der Motor ist insbesondere bei kleinen Drehzahlen wie hier den gezeigten 10 Umdrehungen pro Minute nicht in der Lage, nennenswerte Drehmomente zu produzieren.

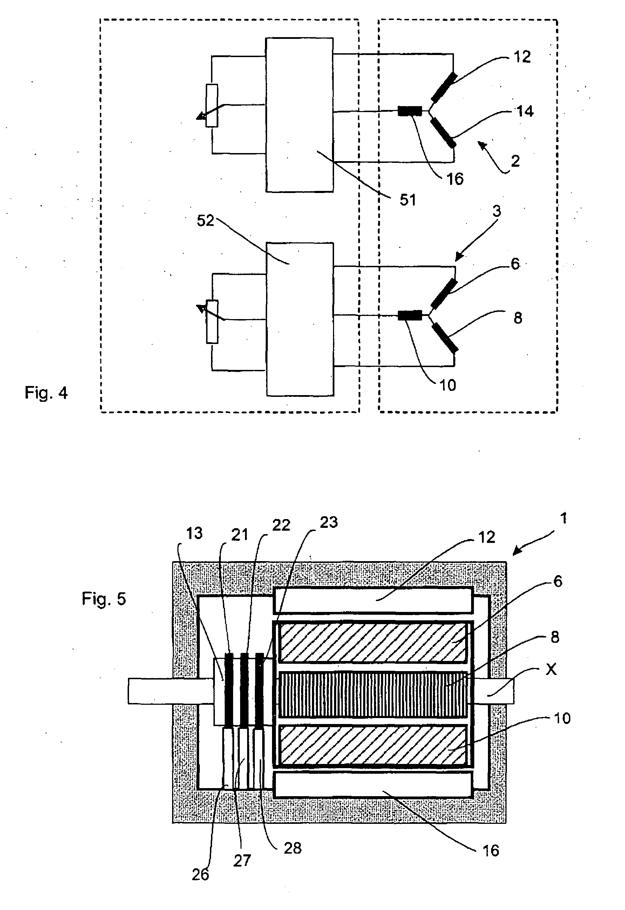

Figur 4 zeigt eine Beschaltung eines Motors genauer gesagt die Beschaltung eines Stators 2 und eines Rotors 3 dieses Motors. Dabei werden sowohl der Stator als auch der Rotor bzw. die jeweiligen Stator- und Rotorspulen 6, 8, 10 bzw. 12, 16, 14 mit unterschiedlichen Frequenzen beschaltet. Diese Frequenzen werden von Drehstromgeneratoren 51 und 52 produziert. Die einzelnen Spulen können, wie im Stand der Technik bekannt, beispielsweise in einer Sternschaltung oder auch im Wege einer Dreiecksschaltung betrieben werden.

Figur 5 zeigt eine schematische Darstellung eines Motors. Bei diesem Motor, der nicht Gegenstand der Erfindung ist, weist der Stator ebenfalls drei Statorspulen 12, 14, 16 auf, wobei die Spule 14 nicht gezeigt ist. Der Rotor weist drei Spulen 6, 8 und 10 auf, wobei die Spulenwicklungen, wie im Stand der Technik bekannt, jeweils um Rotorvorsprünge gewickelt sind. 21, 22 und 23 beziehen sich auf drei Schleiferringe zur Versorgung der jeweiligen Rotorspulen 6, 8 und 10. Damit werden sowohl der Rotor als auch der Stator mit Drehströmen gespeist bzw. der Rotor wird über die Schleiferringe mit Drehstrom versorgt. Bezugszeichen 26, 27 und 28 beziehen sich auf Bürsten zur Stromzuführung. Die resultierende Drehzahl des Rotors $\Omega_{Rotor}$ hängt wie oben erwähnt von der Differenz der Frequenzen der beiden Drehströme ab. Die Schleiferringe sind auf einem Zylinder 13 angeordnet.

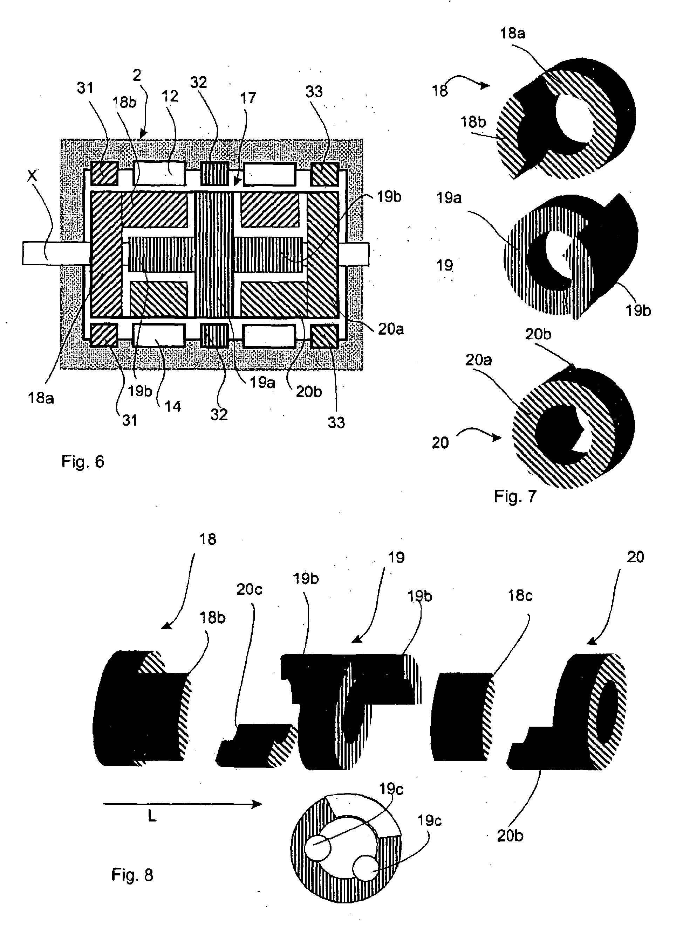

Figur 6 zeigt eine Ausführungsform eines erfindungsgemäßen Motors, wobei bei dieser Ausführungsform der Motor ohne Schleiferringe ausgeführt ist. Anstelle der Schleiferringe ist hier ein Rotorkörper 17 vorgesehen, der sich aus drei Segmenten 18, 19 und 20 zusammensetzt. Diese einzelnen Segmente 18, 19, 20 dienen als magnetische Gleiterringe mit Magnetpols zur direkten Übertragung der Magnetfelder von den mit Drehstrom versorgten stationären Erregerspulen 31, 32 und 33. Mit anderen Worten induzieren diese stationären 31, 32, 33 magnetische Felder in den Segmenten 18, 19 und 20. Die Bezugszeichen 12 und 14 beziehen sich wiederum auf die Statorspulen.

Die einzelnen Segmente 18, 19 und 20 sind in Figur 7 im Detail dargestellt. Die einzelnen Segmente weisen jeweils einen Ringabschnitt 18a, 19a, 20a und einen Vorsprung 18b, 19b und 20b auf. Bei der in Figur 7 gezeigten Ausführungsform erstrecken sich die einzelnen Vorsprung 18b, 19b und 20b jeweils über einen Winkel von im Wesentlichen 120°. Damit wird durch drei in Umfangsrichtung nebeneinander angeordnete Vorsprünge ein Vollkreis abgedeckt.

Durch die stationäre Erregerspulen 31, 32 und 33 werden, wie gesagt, die einzelnen Segmente magnetisiert und damit auch ein Magnetfeld in den Vorsprüngen 18b, 19b und 20b induziert. Diese Magnetfelder hängen wiederum von der Bestromung der Erregerspulen 31, 32 und 33 ab. Damit kann bei dieser Ausführungsform in den einzelnen Vorsprüngen in ähnlicher Weise ein Magnetfeld erzeugt werden wie im Falle einer direkten Übertragung der Ströme durch Schleiferringe.

Figur 8 zeigt eine Seitenansicht der in Figur 7 gezeigten Segmente. Man erkennt, dass das mittlere Segment 19 nach links und rechts ragende Vorsprünge 19b aufweist. Die beiden anderen Segmente 18 und 20 weisen jeweils nur Vorsprünge 18b, 20b in einer Richtung auf. Die Bezugszeichen 18c und 20c bezeichnen jeweils Bestandteile der einzelnen Segmente 18 bzw. 20 und können damit entsprechend magnetisiert werden. In dem Rotorkörper 17 (d.h. der Verbund aus den Segmenten 18, 19, 20) sind die einzelnen Segmente 18, 19, 20 gegeneinander magnetisch isoliert, sodass sich unabhängig voneinander die induzierten Magnetpole ausbilden können.

In dem unteren Teilbereich von Figur 8 ist eine Draufsicht auf das mittlere Segment 19 gezeigt. Dieses weist zwei Ausnehmungen 19c auf, mittels derer der Vorsprung 20b mit dem Bestandteil 20c magnetisch verbunden werden kann und in gleicher Weise auch der Vorsprung 18b mit dem Segment 18c magnetisch verbunden werden kann.

Damit kann der in Figur 6 gezeigte Motor ohne Schleiferringe auskommen, da die jeweils felderzeugenden Spulen stationär am Stator angeordnet sind.

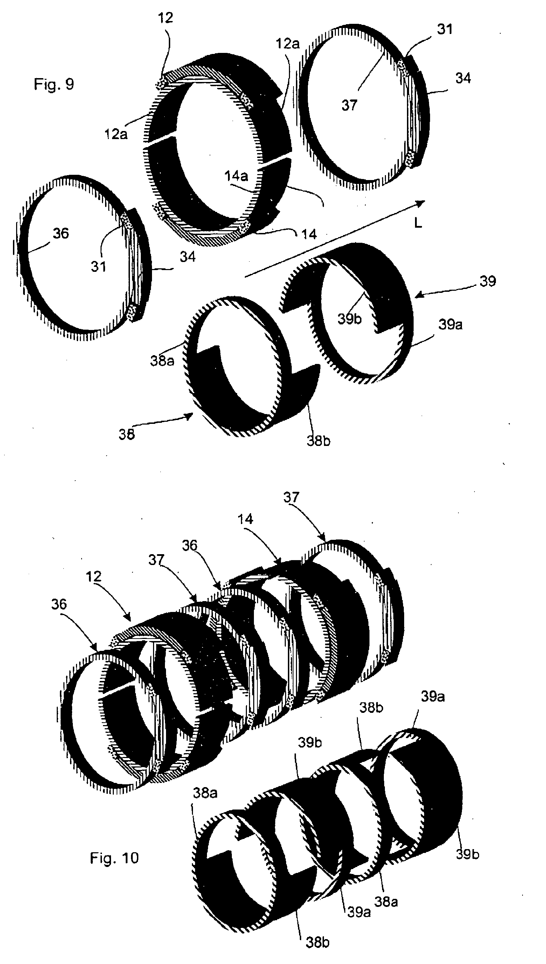

Figur 9 zeigt eine weitere Ausführungsform eines Stators 2 zusammen mit einem Rotor 3. Dabei ist der Stator 2 im oberen Teilbild gezeigt und der Rotor 3 im unteren Teilbild. An dem Stator sind wiederum die Statorspulen 12 und 14 vorgesehen und stehen magnetisch mit breiten Halbringen 12a und 14a in Verbindung. Daneben weist der Stator 2 links- und rechtsseitige dünne Ringe 36, 37 auf, an denen jeweils die Erregerspulen 31, um Kerne 34 gewickelt, angeordnet sind. Der Rotor 3 weist bei dieser Ausführungsform zwei Rotorsegmente 38, 39 auf. Auch diese Rotorsegmente besitzen je ein Ringsegment 38a, 39a und einen Vorsprung 38b, 39b. In Betrieb werden die Ringe 38, 39 jeweils durch die Erregerspulen 31 magnetisiert, wobei die Erregerspulen 31 mit einem Drehstrom beaufschlagt werden.

In Figur 10 sind zwei derartige Rotor- und Statorkombinationen hintereinander angeordnet. Bei dieser Ausführungsform ist damit ein Zwei-Phasen-Motor gezeigt mit einem Phasenunterschied von 90°, d.h. mit zwei hintereinander geschalteten Abschnitten, die gegeneinander um 90° verdreht sind. Es wäre jedoch auch möglich, einen Drei-Phasen-Motor zu bilden, in dem drei Abschnitte hintereinander geschaltet werden und je ein Abschnitt pro Phase vorgesehen ist. In diesem Falle würden die einzelnen Abschnitte um 120° gegeneinander verdreht werden.

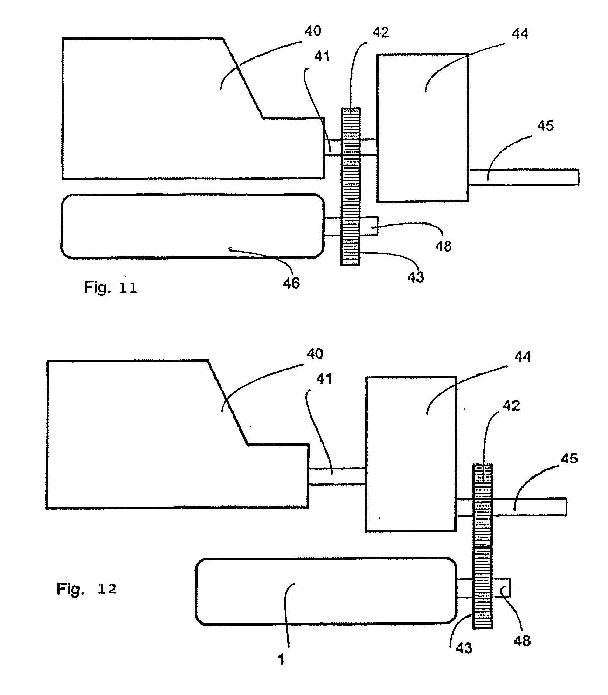

Die Figuren 11 und 12 zeigen ein Beispiel für eine Anwendung eines erfindungsgemäßen Motors. Dabei ist es möglich, den erfindungsgemäßen Motor in Elektrofahrzeugen anzuwenden. Die Eigenschaft, dass die erfindungsgemäße elektrische Maschine im gesamten Drehzahlbereich mit hohem Drehmoment betrieben werden kann, wobei das größte Drehmoment bei sehr niedrigen Drehzahlen erreicht wird, ermöglicht den Verzicht auf das übliche Schaltgetriebe. Auf diese Weise kann Energie eingespart werden.

Figur 11 zeigt die übliche Anordnung eines Elektromotors nach dem Stand der Technik. Dieser Elektromotor 46 ist parallel zu einem Brennkraftmotor 40 angeordnet. Der Elektromotor weist eine Antriebswelle 48 auf und der Brennkraftmotor eine Abtriebswelle 41. An diesen Abtriebswellen 48 und 41 sind jeweils Zahnräder 42, 43 angeordnet, sodass sowohl das Drehmoment des Elektromotors als auch das Drehmoment der Brennkraftmaschine 40 über ein Getriebe 44 auf eine Abtriebswelle 45 übertragen werden kann. Bei der erfindungsgemäßen Anordnung (Fig. 12) ist ebenfalls die Brennkraftmaschine über eine Abtriebswelle 41 und ein Getriebe 44 mit einer Abtriebswelle 45 verbunden. Der erfindungsgemäße Elektromotor 1 kann jedoch in diesem Falle direkt, d.h. ohne Zwischenschaltung des Getriebes 44 mit der Abtriebswelle 45 in Verbindung stehen und diese damit ohne Zwischenschaltung des Getriebes antreiben.

Der erfindungsgemäße Elektromotor kann auch umgekehrt als Strommaschine bzw. Generator verwendet werden. Dazu ist es möglich, bei dem erfindungsgemäßen Motor den Rotor mit einem konstanten Magnetfeld zu versorgen beispielsweise durch Speisung mit Gleichstrom. In diesem Fall wird durch Drehung des Rotors in den Spulen Drehstrom induziert. Diese Vorgehensweise eignet sich insbesondere bei dem in Figur 5 gezeigten Elektromotor, bei dem dem Rotor über Schleiferringe das Drehmoment zugeführt wird. Im Falle eines Elektromotors nach den Figuren 6 und 10 die jeweils ohne Schleiferringe arbeiten, ist es möglich, den Rotor mit einem konstanten Magnetfeld zu versorgen beispielsweise durch Speisung der Erregerspulen 31, 32, 33 mit Gleichstrom. In diesem Fall wird durch eine Drehung des Rotors in den Statorspulen 10, 12, 14 Drehstrom induziert. Dieser erzeugte Drehstrom kann in beiden Fällen beispielsweise für die Aufladung von Batterien verwendet werden.

## Patentansprüche

1. Elektromotor mit einem Stator (2), mit einem um eine Rotorachse drehbar gegenüber dem Stator (2) angeordneten Rotor (3) und mit Erregerspulen (31, 32, 33) zur berührungslosen magnetischen Speisung des Rotors (3) mittels einer Wechselspannung mit einer ersten Frequenz ($\omega_{Rotor}$), wobei der Rotor (3) mehrere Segmente (18, 19, 20) aufweiset, von denen jedes Segment (18, 19, 20) je einen ringförmigen Abschnitt (18a, 19a, 20a) besitzt und bei dem die ringförmigen Abschnitte (18a, 19a, 20a) Vorsprünge (18b, 19b, 20b) aufweise, wobei der Stator (2) Statorspulen (12, 14) aufweist, die mit einer zweiten Wechselspannung einer zweite Frequenz ($\omega_{Stator}$) speisbar sind und wenigstens eine der Frequenzen ($\omega_{Stator}$, $\omega_{Rotor}$) veränderbar ist,
**dadurch gekennzeichnet,**
**dass** ein erstes Segment (18) mit einem ersten ringförmigen Abschnitt (18a), ein zweites Segment (19) mit einem zweiten ringförmige Abschnitt (19a) und ein drittes Segment (20) mit einem dritten ringförmigen Abschnitt (20a) vorgesehen sind, dass die ringförmigen Abschnitte (18a, 19a, 20a) bezogen auf die Rotorachse axial hintereinander angeordnet sind, dass das erste Segment (18) einen sich von dem ersten ringförmigen Abschnitt (18a) in einer Längsrichtung des Rotorkörpers erstreckende und zwischen dem ersten ringförmigen Abschnitt (18a) und dem zweiten ringförmigen Abschnitt (19a) angeordneten Vorsprung aufweist, dass das erste Segment (18) einen Bestandteil (18c) aufweist der magnetisch mit dem Vorsprung (18b) des ersten Segmentes (18) verbunden ist und zwischen dem zweiten ringförmigen Abschnitt (19a) und dem dritten ringförmigen Abschnitt (20a) angeordnet ist, dass das zweite Segment (19) zwei sich von dem zweiten ringförmigen Abschnitt (19a) in Längsrichtung des Rotorkörpererstreckende Vorsprünge (19b) aufweist, von denen der eine Vorsprung (19b) zwischen dem ersten ringförmigen Abschnitt (18a) und dem zweiten ringförmigen Abschnitt (19a) und der andere Vorsprung (19b) zwischen dem zweiten ringförmigen Abschnitt (19a) und dem dritten ringförmige Abschnitt (20a) angeordnet sind, dass das dritte Segment (20) eine sich vom dritten ringförmige Abschnitt (20a) in Längsrichtung des Rotorkörpers erstreckenden Vorsprung (20b) ausweist, der zwischen dem dritten ringförmigen Abschnitt (20a) und dem zweite ringförmigen Abschnitt (10a) angeordnet ist, dass das dritte Segment (20) einen Bestandteil (20c) aufweist, der magnetisch mit einem Vorsprung (20b) des dritten Segmentes (20) verbunden und zwischen dem zweiten ringförmigen Abschnitt /19a) und dem ersten ringförmigen Abschnitt (18a) angeordnet ist, und dass jedem Segment (18, 19, 20) eine der Erregerspulen (31, 32, 33) zur Induktion magnetischer Felder in den Segmenten (18, 19, 20) zugeordnet ist.

2. Elektromotor mit einem Stator (2), mit einem um eine Rotorachse drehbar gegenüber dem Stator (2) angeordneten Rotor (3) und mit Erregerspulen (31) zur berührungslosen magnetischen Speisung des Rotors mittels einer Wechselspannung mit einer ersten Frequenz ($\omega_{Rotor}$), wobei der Rotor (3) mehrere Rotorsegmente (38, 39) aufweist, von denen jedes Rotorsegment (38, 39) je ein Ringsegment (38a, 39a) besitzt und bei dem die Ringsegmente (38a, 39a) Vorsprünge (38b, 39b) aufweisen, wobei der Stator (2) Statorspulen (12, 14) aufweist, die mit einer zweiten Wechselspannung einer zweiten Frequenz ($\omega_{Stator}$) speisbar sind und wenigstens eine der Frequenzen ($\omega_{Stator}$, $\omega_{Rotor}$) veränderbar ist, **dadurch gekennzeichnet, dass** zwei oder drei axial hinter einander angeordnete Rotor- und Statorkombinationen mit jeweils einem Rotor (3) und einem Stator (2) vorgesehen sind, um einen Zwei- oder Dreiphasenmotor zu bilden, dass der Stator (2) einen Mittelteil (12a, 14a) aufweist, an dem die Statorspulen (12, 14) vorgesehen sind, dass beidseitig vom Mittelteil (12a, 14a) jeweils ein Ring (36, 37) vorgesehen ist, wobei an den Ringen (36, 37) die Erregerspulen (34) angeordnet sind, dass der Rotor (3) erste und zweite axial hintereinander angeordnete Rotorsegmente (38, 39) aufweist, die jeweils ein Ringsegment (38a, 39a) besitzen, dass das erste Rotorsegment (38) an Seinem Ringsegment (38a) einen sich in Richtung des Ringsegmentes (39a) des zweiten Rotorsegments (39) erstreckenden Vorsprung (38b) aufweist, dass das zweite Rotorsegment (39) an seinem Ringsegment (39a) einen sich in Richtung des Ringsegmentes (38a) des ersten Rotorsegments (38) erstreckenden Vorsprung (39b), und dass jedem Ringsegment (38a, 39a) ein Ring (36, 37) des Stators (2) zur Magnetisierung der Rotorsegmente (38, 39) durch die Erregerspulen (34) zugeordnet ist.

**Claims**

1. Electric motor with a stator (2), with a rotor (3) mounted rotatable about a rotor axis opposite the stator (2) and with exciter coils (31, 32, 33) for the contactless magnetic excitation of the rotor (3) by means of an alternating voltage with a first frequency ($\omega_{rotor}$), wherein the rotor (3) has several segments (18, 19, 20) of which each segment (18, 19, 20) each has one ring-shaped section (18a, 19a, 20a) and wherein the ring-shaped sections (18a, 19a, 20a) have projections (18b, 19b, 20b), wherein the stator (2) has stator coils (12, 14) which can be excited with a second alternating voltage of a second frequency ($\omega_{stator}$) and at least one of the frequencies ($\omega_{stator}$, $\omega_{rotor}$) is variable **characterised in that** a first segment (18) is provided with a first ring-shaped section (18a), a second segment (19) is provided with a second ring-shaped section (19a) and a third segment (20) is provided with a third ring-shaped section (20a), that the ring-shaped sections (18a, 19a, 20a) are arranged axially in succession in relation to the rotor axis, that the first segment (18) has a projection extending from the first ring-shaped section (18a) in a longitudinal direction of the rotor body and arranged between the first ring-shaped section (18a) and the second ring-shaped section (19a), that the first segment (18) has a constituent part (18c) which is connected magnetically to the projection (18b) of the first segment (18) and is arranged between the second ring-shaped section (19a) and the third ring-shaped section (20a), that the second segment (19) has two projections (19b) extending from the second ring-shaped section (19a) in the longitudinal direction of the rotor body, of which one projection (19b) is arranged between the first ring-shaped section (18a) and the second ring-shaped section (19a) and the other projection (19b) is arranged between the second ring-shaped section (19a) and the third ring-shaped section (20a), that the third segment (20) has a projection (20b) extending in the longitudinal direction of the rotor body from the third ring-shaped section (20a) wherein this projection (20b) is arranged between the third ring-shaped section (20a) and the second ring-shaped section (10a), that the third segment (20) has a constituent part (20c) which is connected magnetically to the projection (20b) of the third segment (20) and is arranged between the second ring-shaped section (19a) and the first ring-shaped section (18a), and that one of the exciter coils (31, 32, 33) is assigned to each segment (18, 19, 20) for the induction of magnetic fields in the segments (18, 19, 20).

2. Electric motor with a stator (2), with a rotor (3) mounted rotatable about a rotor axis opposite the stator (2) and with exciter coils (31) for the contactless magnetic excitation of the rotor by means of an alternating voltage with a first frequency ($\omega_{rotor}$) wherein the rotor (3) has several rotor segments (38, 39) of which each rotor segment (38, 39) each has one ring segment (38a, 39a) and in which the ring segments (38a, 39a) have projections (38b, 39b) wherein the stator (2) has stator coils (12, 14) which can be excited with a second alternating voltage of a second frequency ($\omega_{stator}$) and at least one of the frequencies ($\omega_{stator}$), ($\omega_{rotor}$) is variable,

**characterised in that** two or three rotor and stator combinations arranged axially in succession are each provided with one rotor (3) and one stator (2) in order to make up one two- or three-phase motor, that the stator (2) has a centre part (12a, 14a) on which the stator coils (12, 14) are provided, that one ring (36, 37) is provided on each side of the centre part (12a, 14a) wherein the exciter coils (34) are mounted on the rings (36, 37), that the rotor (3) has first and second rotor segments (38, 39) which are arranged axially in succession and which each have a ring segment (38a, 39a), that the first rotor segment (38) has on its ring segment (38a) a projection (38b) extending in the direction of the ring segment (39a) of the second rotor segment (35), that the second rotor segment (39) has on its ring segment (39a) a projection (39b) extending in the direction of the ring segment (38a) of the first rotor segment (38), and that one ring (36, 37) of the stator (2) is assigned to each ring segment (38a, 39a) for the magnetization of the rotor segments (38, 39) through the exciter coils (34).

**Revendications**

1. Moteur électrique avec un stator (2), avec un rotor (3) disposé de manière rotative autour d'un axe de rotor par rapport au stator (2) et avec des bobines d'excitation (31, 32, 33) pour l'alimentation magnétique sans contact du rotor (3) à l'aide d'une tension alternative d'une première fréquence ($\omega_{Rotor}$), le rotor (3) présentant plusieurs segments (18, 19, 20), chacun de ces segments (18, 19, 20) possédant respectivement un tronçon annulaire (18a, 19a, 20a) et avec lequel les tronçons annulaires (18a, 19a, 20a) présentent des saillies (18b, 19b, 20b), le stator (2) présentant des bobines de stator (12, 14), lesquelles peuvent être alimentées avec une tension alternative d'une deuxième fréquence ($\omega_{Stator}$) et au moins l'une des fréquences ($\omega_{Stator}$), $\omega_{Rotor}$) étant variable,
**caractérisé en ce**
**qu'**un premier segment (18) avec un premier tronçon annulaire (18a), un deuxième segment (19) avec un deuxième tronçon annulaire (19a) et un troisième segment (20) avec un troisième tronçon annulaire (20a) sont prévus, en ce que les tronçons annulaires (18a, 19a, 20a), par rapport à l'axe du rotor, sont disposés axialement les uns derrière les autres, en ce que le premier segment (18) présente une saillie s'étendant à partir du premier tronçon annulaire (18a) dans une direction longitudinale du corps du rotor et disposée entre le premier tronçon annulaire (18a) et le deuxième tronçon annulaire (19a), en ce que le premier segment (18) présente un composant (18c), lequel est en liaison magnétique avec la saillie (18b) du premier segment (18) et est disposé entre le deuxième tronçon annulaire (19a) et le troisième tronçon annulaire (20a), en ce que le deuxième segment (19) présente deux saillies (19b) s'étendant à partir du deuxième tronçon annulaire (19a) en direction longitudinale du corps du rotor, l'une (19b) de ces saillies étant disposée entre le premier tronçon annulaire (18a) et le deuxième tronçon annulaire (19a) et l'autre saillie (19b) étant disposée entre le deuxième tronçon annulaire (19a) et le troisième tronçon annulaire (20a), en ce que le troisième segment (20) présente une saillie (20b) s'étendant à partir du troisième tronçon annulaire (20a) en direction longitudinale du corps du rotor, laquelle est disposée entre le troisième tronçon annulaire (20a) et le deuxième tronçon annulaire (10a), en ce que le troisième segment (20) présente un composant (20c), lequel est en liaison magnétique avec une saillie (20b) du troisième segment (20) et est disposé entre le deuxième tronçon annulaire (19a) et le premier tronçon annulaire (18a), et en ce que l'on associe à chacun des segments (18, 19, 20) l'une des bobines d'excitation (31, 32, 33) pour l'induction de champs magnétiques dans les segments (18, 19, 20).

2. Moteur électrique avec un stator (2), avec un rotor (3) disposé de manière rotative autour d'un axe de rotor par rapport au stator (2) et avec des bobines d'excitation (31) pour l'alimentation magnétique sans contact du rotor à l'aide d'une tension alternative d'une première fréquence ($\omega_{Rotor}$), le rotor (3) présentant plusieurs segments de rotor (38, 39), chacun de ces segments de rotor (38, 39) possédant respectivement un tronçon annulaire (38a, 39a) et avec lequel les tronçons annulaires (38a, 39a) présentent des saillies (38b, 39b), le stator (2) présentant des bobines de stator (12, 14), lesquelles peuvent être alimentées avec une deuxième tension alternative d'une deuxième fréquence ($\omega_{Stator}$) et au moins l'une des fréquences ($\omega_{Stator}$, $\omega_{Rotor}$) étant variable,
**caractérisé en ce que**
deux ou trois combinaisons de rotor et de stator disposées axialement les unes derrière les autres avec respectivement un rotor (3) et un stator (2) sont prévues, afin de former un moteur biphasé ou triphasé, **en ce que** le stator (2) présente une partie médiane (12a, 14a), sur laquelle on prévoit les bobines de stator (12, 14), **en ce que** des deux côtés de la partie médiane (12a, 14a) on prévoit respectivement une bague (36, 37), les bobines d'excitation (34) étant disposées sur les bagues (36, 37), **en ce que** le rotor (3) présente des premier et deuxième segments de rotor (38, 39) disposés axialement l'un derrière l'autre, lesquels présentent respectivement des segments annulaires (38a, 39a), **en ce que** le premier segment de rotor (38) présente sur son segment annulaire (38a) une saillie (38b) s'étendant en direction du segment annulaire (39a) du deuxième segment de rotor (39), **en ce que** le deuxième segment de rotor (39) présente sur son segment annulaire (39a) une saillie (39b) s'étendant en direction du segment annulaire (38a) du premier segment de rotor (38), et **en ce que** l'on associe à chaque segment annulaire (38a, 39a) une bague (36, 37) du stator (2) pour la magnétisation des segments de rotor (38, 39) grâce aux bobines d'excitation (34).

Fig. 1

Fig. 2

Fig. 3

Fig. 4

Fig. 5

Fig. 6

Fig. 7

Fig. 8

Fig. 9

Fig. 10

40

41

42

44

45

48

43

46

Fig. 11

40

41

44

42

45

43

48

Fig. 12

1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6252331 B1